# EUROPÄISCHE PATENTSCHRIFT

(11) **EP 2 516 887 B1**
(45) Veröffentlichungstag und Bekanntmachung des Hinweises auf die Patenterteilung: **19.06.2019**
(21) Anmeldenummer: 10805584.9
(22) Anmeldetag: 13.12.2010
(51) Int. Cl.: F16F 15/14

(54) **FLIEHKRAFTPENDELEINRICHTUNG**
CENTRIFUGAL PENDULUM MECHANISM
DISPOSITIF DE PENDULE CENTRIFUGE

(30) Priorität: 21.12.2009 DE 102009059755; 25.05.2010 DE 102010021410
(43) Veröffentlichungstag der Anmeldung: 31.10.2012
(73) Patentinhaber: Schaeffler Technologies AG & Co. KG, 91074 Herzogenaurach (DE)
(72) Erfinder: MAIENSCHEIN, Stephan, 76534 Baden-Baden (DE); HÜGEL, Christian, 77866 Rheinau (DE); JUNG, Stefan, 77694 Kehl (DE); SCHNÄDELBACH, David, 76534 Baden-Baden-Neuweier (DE)
(86) Internationale Anmeldenummer: PCT/DE2010/001453
(87) Internationale Veröffentlichungsnummer: WO 2011/076169

(56) Entgegenhaltungen:
- EP-A2- 1 744 074
- DE-A1- 1 426 088
- US-A- 2 112 984

## Beschreibung

Die Erfindung betrifft eine Fliehkraftpendeleinrichtung, umfassend wenigstens einen Pendelmassenträger und wenigstens eine daran angeordnete Pendelmasse, die mittels zumindest eines Abrollelementes innerhalb durch Aussparungen in dem Pendelmassenträger und der Pendelmasse gebildeten Laufbahnen gegenüber dem Pendelmassenträger radial und in Umfangsrichtung begrenzt bewegbar ist, wobei das Abrollelement ein im Spalt zwischen der einzelnen Pendelmasse und Pendelmassenträger ausgebildetes Führungsmittel aufweist.

In Antriebssträngen werden zur Tilgung von Schwingungen über einen breiten, vorzugsweise den gesamten Drehzahlbereich der antreibenden Maschine drehzahladaptive Tilger eingesetzt. Diese sind in der Lage, Drehschwingungen über einen größeren Drehzahlbereich, idealerweise über den gesamten Drehzahlbereich der Antriebsmaschine zu tilgen, indem diese derart ausgeführt und angeordnet werden, dass deren Eigenfrequenz proportional zur Drehzahl ist. Derartige Tilger arbeiten nach dem Prinzip eines Fliehkraftpendels im Fliehkraftfeld. Diese umfassen einen um eine Drehachse drehbaren Pendelmassenträger und pendelnd an diesem um die Drehachse des Pendelmassenträgers gelagerte Trägheits- beziehungsweise Pendelmassen. Dabei sind die einzelnen Pendelmassen bei Einleitung einer Drehbewegung bestrebt, die Drehachse in größtmöglichem Abstand zu umkreisen. Die Drehschwingungen führen zu einer pendelnden Relativbewegung der Pendelmassen. Es sind dabei unterschiedliche Systeme bekannt, bei denen sich die Pendelmassen relativ zur Drehmomenteinleitungsachse entweder rein translatorisch auf einer kreisförmigen Bewegungsbahn bewegen oder aber die Bewegungsbahn einen Krümmungsradius aufweist, der sich mit zunehmender Auslenkung der Pendelmasse aus der mittleren Position wenigstens abschnittsweise ändert.

Aus der Druckschrift DE 10 2006 028 556 A1 ist eine gattungsgemäße Fliehkraftpendeleinrichtung in einem Antriebsstrang eines Kraftfahrzeugs mit einem drehbaren Pendelmassenträger und daran paarweise gegenüberliegend angeordneten Pendelmassen bekannt. Die Pendelmassen sind mit Hilfe von Abrollelementen gegenüber dem Pendelmassenträger begrenzt bewegbar, wozu die Abrollelemente in durch Aussparungen in dem Pendelmassenträger und in den Pendelmassen gebildeten Laufbahnen begrenzt bewegbar sind. Beispielsweise sind die Aussparungen als durchgängige Langlöcher mit nierenförmiger Krümmung ausgebildet. Die Abrollelemente weisen zwischen dem Pendelmassenträger und der jeweils benachbarten Pendelmasse ein im Bereich zwischen Pendelmasse und Pendelmassenträger ausgestaltetes Führungsmittel, beispielsweise in Form eines Bundes oder Schulter auf, damit die Pendelmasse bei der Bewegung gegenüber dem Pendelmassenträger geführt ist und nicht gegen diesen anschlägt. Bedingt durch die axiale Breite derartiger Führungsmittel, die in integraler Ausführung am Abrollelement ausgebildet sind oder aber mit diesem drehfest verbunden werden, wird ein Mindestabstand zwischen den zueinander weisenden Oberflächen von Pendelmasse und Pendelmassenträger erzeugt, welcher nicht beliebig reduziert werden kann, um die Abrollbewegung nicht zu behindern. Der dadurch erzeugte relativ große Spaltabstand zwischen der zum Pendelmassenträger weisenden Oberfläche einer einzelnen Pendelmasse und dem Pendelmassenträger ermöglicht jedoch ein Verkippen der Pendelmasse gegenüber dem Pendelmassenträger, was insbesondere bei geringen Drehzahlen und damit geringer Fliehkraftwirkung ein erhebliches Problem darstellen kann. Die Funktionsweise des Fliehkraftpendels in diesem Drehzahlbereich ist dann beeinträchtigt und für den Wiederholungsfall nicht sicher reproduzierbar. Das Verkippen kann ferner zu Beschädigungen an den einzelnen Komponenten und den Verbindungen sowie der pendelnden Lagerung der Pendelmasse am Pendelmassenträger führen.

Aufgabe der Erfindung ist es, eine verbesserte Fliehkraftpendeleinrichtung mit Reduzierung der Kippneigung der einzelnen Pendelmassen gegenüber dem Pendelmassenträger und hoher Stabilität zu schaffen.

Die erfindungsgemäße Lösung ist durch die Merkmale des Anspruchs 1 charakterisiert. Vorteilhafte Ausgestaltungen sind in den Unteransprüchen beschrieben. Im Folgenden werden Ausführungen der Fliehkraftpendeleinrichtung beschrieben. Eine erste, nicht erfindungsgemäße Grundausführung mit einer ersten und einer zweiten Variante, sowie eine zweite, erfindungsgemäße Grundausführung mit einer ersten Variante.

Eine erfindungsgemäß ausgeführte Fliehkraftpendeleinrichtung, umfassend wenigstens einen Pendelmassenträger und wenigstens eine daran angeordnete Pendelmasse, die mittels zumindest eines Abrollelementes innerhalb von durch Aussparungen in dem Pendelmassenträger und der Pendelmasse gebildeten Laufbahnen aufgenommen und durch die Pendelmasse und den Pendelmassenträger durchgreifenden Abrollelements gegenüber dem Pendelmassenträger radial und in Umfangsrichtung begrenzt bewegbar ist, wobei das Abrollelement ein im Spalt zwischen Pendelmasse und Pendelmassenträger ausgebildetes Führungsmittel aufweist, ist dadurch gekennzeichnet, dass im Spalt zwischen Pendelmasse und Pendelmassenträger außerhalb der Laufbahnen für das Abrollelement und des bei Abrollbewegung des Abrollelementes durch die Führungsmittel überstreichbaren Bereiches des Spaltes Mittel zur zumindest örtlich begrenzten Verringerung des Spaltabstandes zwischen Pendelmasse und Pendelmassenträger vorgesehen sind.

Unter dem Spalt zwischen einer einzelnen Pendelmasse und dem Pendelmassenträger wird der sich in axialer Richtung erstreckende und sich in radialer Richtung und Umfangsrichtung ausgebildete Zwischenraum zwischen einer Pendelmasse und dem Pendelmassenträger verstanden. Die Lage des Spaltes variiert mit der Lage der einzelnen Pendelmasse bei Auslenkung aufgrund des Fliehkrafteinflusses. Die Spaltbreite, welche den axialen Abstand zwischen Pendelmasse und Pendelmassenträger bestimmt, wird jeweils zwischen den zueinander weisenden Oberflächen von Pendelmasse und Pendelmassenträger gemessen. Die Spaltbreite kann über die gesamte Erstreckung einer einzelnen zum Pendelmassenträger gerichteten Stirnseite einer einzelnen Pendelmasse betrachtet konstant sein oder aber in Erstreckungsrichtung in radialer Richtung und/oder in Umfangsrichtung variieren.

Unter Verringerung im Sinne der Erfindung wird eine Verkleinerung der axialen Spaltbreite verstanden, wobei die Verkleinerung immer noch unter Beibehaltung eines Mindestspaltes erfolgt, um eine Beeinträchtigung der Wirkungsweise des Fliehkraftpendels durch Reibung zwischen Pendelmasse und Pendelmassenträger beim Auslenken unter Fliehkrafteinfluss zu vermeiden. D.h. die Mittel sind derart ausgelegt und angeordnet, dass im unbelasteten Zustand des Fliehkraftpendels die einzelne Pendelmasse und der Pendelmassenträger noch frei von einer Berührung miteinander sind. Die Festlegung des Mindestabstandes erfolgt in Abhängigkeit des Einsatzgebietes einer derartigen Fliehkraftpendeleinrichtung.

Durch die über die erfindungsgemäß vorgesehenen Mittel zumindest örtlich erzielbare Verringerung des Spaltabstandes zwischen Pendelmasse und Pendelmassenträger wird der theoretisch mögliche Kippwinkel reduziert und ein unerwünschtes Verkippen der einzelnen Pendelmassen, insbesondere bei geringen Drehzahlen vermieden sowie die Stabilität des Fliehkraftpendels insgesamt erhöht.

Bezüglich der Anordnung und Ausbildung der Mittel zur zumindest örtlich begrenzten Verringerung des Spaltabstandes kann zwischen zwei Grundausführungen unterschieden werden. Die erste, nicht erfindungsgemäße Grundausführung ist dadurch gekennzeichnet, dass zumindest ein oder mehrere derartige Mittel vorgesehen sind, die jeweils nur in zumindest einem Teilbereich des Spaltes zwischen Pendelmasse und dem Pendelmassenträger angeordnet und wirksam sind. Diese Ausführung bietet den Vorteil, dass örtlich gezielt eine Spaltverringerung erzielbar ist, wobei die Anzahl und/oder Geometrie und/oder Dimensionierung und/oder Anordnung der Mittel im Spalt in Abhängigkeit der Geometrie und Dimensionierung des Fliehkraftpendels, insbesondere der einzelnen Pendelmasse erfolgt. Da die Mittel hinsichtlich ihrer Dimensionierung kleiner als die einzelne Pendelmasse sind, kann auf standardisierte Abstandselemente unabhängig von deren Geometrie zurückgegriffen werden, welche in besonders vorteilhafter Weise in die Abstandshalterung der Pendelmasse zum Pendelmassenträger integrierbar sind.

In besonders vorteilhafter Ausbildung wird in der ersten Grundausführung eine Anordnung der Mittel zur zumindest örtlich begrenzten Verringerung des Spaltabstandes zwischen Pendelmasse und Pendelmassenträger gewählt, welche bezogen auf die Pendelmasse symmetrisch ist.

Die zweite, erfindungsgemäße Grundausführung ist durch eine Ausbildung der Mittel zur zumindest örtlich begrenzten Verringerung des Spaltabstandes über die gesamte Erstreckung des Spaltes in radialer Richtung und in Umfangsrichtung außerhalb der Laufbahnen für das Abrollelement und des bei Abrollbewegung des Abrollelementes durch die Führungsmittel überstreichbaren Bereiches zwischen Pendelmasse und Pendelmassenträger charakterisiert. Diese Ausführung bietet den Vorteil der Einstellung eines konstanten Spaltabstandes zwischen Pendelmasse und Pendelmassenträger.

Bezüglich der Zuordnung der Mittel zu den einzelnen Spalt bildenden Komponenten bestehen grundsätzlich drei Möglichkeiten. Gemäß einer ersten und besonders vorteilhaften Möglichkeit sind die Mittel zur zumindest örtlich begrenzten Verringerung des Spaltabstandes der Pendelmasse zugeordnet, vorzugsweise mit der Pendelmasse gekoppelt oder an dieser ausgebildet. Die Zuordnung zur Pendelmasse bietet in vorteilhafter Weise eine einfache Möglichkeit zur Vergrößerung der Masse des Pendels. Die Zuordnung zur Pendelmasse erlaubt die Verwendung standardisierter Pendelmassenträger und vermeidet Modifikationen an diesem.

Gemäß einer zweiten Möglichkeit sind die Mittel zur zumindest örtlich begrenzten Verringerung des Spaltabstandes dem Pendelmassenträger zugeordnet, vorzugsweise mit dem Pendelmassenträger gekoppelt oder an diesem ausgebildet. Diese Ausführung erlaubt eine einfache Berücksichtigung derartig erforderlicher Mittel zur zumindest örtlich begrenzten Verringerung des Spaltabstandes bei der Herstellung des Pendelmassenträgers, welche je nach Art und Ausführung in einem Arbeitsschritt in diesen einarbeitbar sind.

Die dritte Möglichkeit ist durch die Kombination beider vorgenannten Möglichkeiten charakterisiert, wobei bei dieser Ausführung die Vorteile beider Varianten zum Teil miteinander kombiniert werden können.

Für die Ausbildung der einzelnen Mittel zur zumindest örtlich begrenzten Verringerung des Spaltabstandes kann entsprechend einer ersten Variante zwischen der Verwendung von separaten Zusatzelementen und entsprechend einer zweiten Variante der integralen Ausbildung an zumindest einer der Komponenten - Pendelmasse und/oder Pendelmassenträger - unterschieden werden.

Die Ausbildung gemäß der ersten Variante bietet den Vorteil, dass die Mittel zur zumindest örtlich begrenzten Verringerung des Spaltabstandes auch noch nachträglich in bestehende Fliehkraftpendeleinrichtungen integrierbar beziehungsweise nachrüstbar sind. In Abhängigkeit der gewählten Ausführung können in besonders vorteilhafter Weise Zusatzelemente in Form von Standardelementen zum Einsatz gelangen, die einfach vorhaltbar und mit geringem Aufwand mit der Pendelmasse oder dem Pendelmassenträger wenigstens mittelbar verbunden werden können.

In einer vorteilhaften Untervariante der ersten Variante umfassen die Mittel zumindest ein Zusatzelement in Form einer Unterlegscheibe. Bei dieser kann es sich um ein Standardbauteil handeln. Derartige Zusatzelemente sind auf einfache Art und Weise zwischen Pendelmasse und Pendelmassenträger ohne erforderliche Modifikationen anordenbar. Die Unterlegscheiben können mit dem Pendelmassenträger oder einer einzelnen Pendelmasse verbunden werden oder aber bei geeigneter Lagefixierung, beispielsweise über ohnehin vorgesehene axiale Anschlagflächen an einem Abstandsbolzen lose eingelegt und durch die Verbindung der Pendelmasse mit dem axialen Endbereich des Abstandsbolzens im Spalt gehalten werden.

In einer weiteren vorteilhaften Untervariante umfassen die Mittel zumindest ein, wenigstens einen in den Spalt hineinragenden Vorsprung ausbildendes Zusatzelement. Das Zusatzelement kann beispielsweise in Form einer der nachfolgend genannten Komponenten ausgeführt sein:
- Kugel
- Zylinderstift
- Bolzen
- schalenförmiges Element
- Nietkopf

Die Aufzählung ist nicht abschließend. Geeignet sind alle Zusatzelemente, die in einfacher Art und Weise mit dem Pendelmassenträger oder einer einzelnen Pendelmasse verbindbar sind und im Zusammenwirken mit diesen einen in den Spalt gerichteten Vorsprung ausbilden.

Eine weitere Untervariante dieser ersten Variante ist durch die Verwendung eines sich über die gesamte Oberfläche der einzelnen Pendelmasse an der zum Pendelmassenträger gerichteten Stirnseite mit Ausnahme der Laufbahnen und eines Bereiches um diese, der von den einzelnen Führungsmitteln überstreichbar ist, erstreckenden Zusatzelementes, insbesondere in Form einer Scheibe charakterisiert. Diese Ausführung ist im gesamten Pendelmassenbereich im unausgelenktem Zustand durch einen konstanten Spaltabstand charakterisiert.

Bei allen genannten Varianten erfolgt die Verbindung der Zusatzelemente mit der jeweiligen Komponente - Pendelmasse oder Pendelmassenträger - kraft-, form- oder stoffschlüssig.

Im Fall, dass die einzelne Pendelmasse über ein Abstandshalterelement mit dem Pendelmassenträger gekoppelt ist oder die Fliehkraftpendeleinrichtung dadurch charakterisiert ist, dass jeweils zwei Pendelmassen paarweise aneinander gegenüberliegend an einem Pendelmassenträger angeordnet sind und über Abstandsbolzen miteinander gekoppelt und in ihrer Lage zueinander bestimmt sind, kann in besonders vorteilhafter Weise ein derartiges ohnehin vorhergesehenes Abstandshalterelement oder ein Abstandsbolzen zur Befestigung der Mittel zur zumindest örtlich begrenzten Verringerung des Spaltabstandes in Funktionskonzentration mit genutzt werden.

Entsprechend der zweiten Variante sind die Mittel zur zumindest örtlich begrenzten Verringerung des Spaltabstandes in integraler Bauweise an der Pendelmasse und/oder dem Pendelmassenträger ausgebildet. Diese können auf unterschiedliche Art und Weise erzeugt werden.

Gemäß einer ersten Ausführung können örtlich begrenzte, in axialer Richtung ausgebildete Vorsprünge zur Verringerung des Spaltabstandes durch entsprechende Formgebung oder spanende Bearbeitung der Oberfläche der Pendelmasse und/oder des Pendelmassenträgers erzeugt werden. Dabei kann in einer ersten Untervariante zumindest ein Bereich an der Pendelmasse und/oder dem Pendelmassenträger zumindest abschnittsweise angeprägt ausgeführt sein. Die Anprägungen bilden in den Spalt gerichtete Vorsprünge. Dabei ist ein Bereich um die Laufbahn der Pendelmasse und/oder des Pendelmassenträgers zumindest abschnittsweise angeprägt und das Führungsmittel ist in der durch die Anprägung gebildeten Vertiefung aufnehmbar. Dadurch kann die Pendelmasse näher an dem Pendelmassenträger angeordnet werden und der Bauraumbedarf der Fliehkraftpendeleinrichtung wird verringert.

In einer weiteren Ausbildung werden die Mittel zur zumindest örtlich begrenzten Verringerung des Spaltabstandes von zumindest einer Durchsetzung an der Pendelmasse und/oder dem Pendelmassenträger gebildet. Durchsetzungen werden aufgrund der Verdrängung von Material unter Druck und entsprechender Verformung gebildet. Dabei sind die Durchsetzungen derart anzuordnen, dass die dadurch an den gegenüberliegenden Stirnseiten von Pendelmasse und/oder Pendelmassenträger aufgrund der Materialverdrängung ausgebildeten Vorsprünge außerhalb der Laufbahnen für das Abrollelement und außerhalb des überstreichbaren Bereiches für die Führungsmittel liegen. Die Ausbildung von Durchsetzungen erlaubt eine zielgerichtete und einfache Anordnung von axialen Vorsprüngen in der gewünschten Weise zur Abstandsverringerung.

Die erfindungsgemäße Ausführung einer Fliehkraftpendeleinrichtung ist in besonders vorteilhafter Weise mit einem Torsionsschwingungsdämpfer in einem Antriebsstrang eines Kraftfahrzeugs einsetzbar. Der Torsionsschwingungsdämpfer umfasst dabei ein Eingangsteil und ein gegenüber dem Eingangsteil entgegen der Wirkung von Energiespeicherelementen begrenzt verdrehbares Ausgangsteil und eine oder mehrere Dämpferstufen. Die Fliehkraftpendeleinrichtung kann an einem Scheibenteil der Dämpferstufe, beispielsweise an dem Eingangsteil, einem eventuellen Zwischenteil oder dem Ausgangsteil angeordnet sein.

Die erfindungsgemäße Ausführung einer Fliehkraftpendeleinrichtung ist ferner in einem Drehmomentwandler mit einem Torsionsschwingungsdämpfer mit einer daran angeordneten Fliehkraftpendeleinrichtung einsetzbar. Dabei kann der Torsionsschwingungsdämpfer mit der Fliehkraftpendeleinrichtung innerhalb eines Gehäuses des Drehmomentwandlers angeordnet sein.

Ein weiteres vorteilhaftes Anwendungsgebiet ist der Einsatz in einem Zweimassenschwungrad, in einer Doppelkupplung, in einer Nasskupplung oder in einer Trockenkupplung.

Die erfindungsgemäße Lösung wird nachfolgend anhand von Figuren erläutert. Darin ist im Einzelnen Folgendes dargestellt:
- Figur 1: zeigt einen Ausschnitt aus einer erfindungsgemäß ausgebildeten Fliehkraftpendeleinrichtung in einer Ansicht von vorn;
- Figur 2a: zeigt eine Ausführung einer Fliehkraftpendeleinrichtung gemäß dem Stand der Technik in einer Schnittansicht A-A gemäß Figur 1;
- Figur 2b: zeigt eine Ausführung einer Fliehkraftpendeleinrichtung gemäß dem Stand der Technik in einer Schnittansicht B-B gemäß Figur 1;
- Figur 2c: zeigt eine Ausführung einer Fliehkraftpendeleinrichtung gemäß dem Stand der Technik in einer Schnittansicht C-C gemäß Figur 1;
- Figur 3a: zeigt eine erste Ausführung einer erfindungsgemäß ausgeführten Fliehkraftpendeleinrichtung einer ersten Variante einer zweiten Grundausführung in einer Schnittansicht A-A gemäß Figur 1;
- Figur 3b: zeigt eine erste Ausführung einer erfindungsgemäß ausgeführten Fliehkraftpendeleinrichtung einer ersten Variante einer zweiten Grundausführung in einer Schnittansicht B-B gemäß Figur 1;
- Figur 3c: zeigt eine erste Ausführung einer erfindungsgemäß ausgeführten Fliehkraftpendeleinrichtung einer ersten Variante einer zweiten Grundausführung in einer Schnittansicht C-C gemäß Figur 1;
- Figur 4a: zeigt eine Ausführung einer ersten Variante einer ersten Grundausführung einer nicht erfindungsgemäß ausgeführten Fliehkraftpendeleinrichtung in einer Schnittansicht A-A gemäß Figur 1;
- Figur 4b: zeigt eine Ausführung einer ersten Variante einer ersten Grundausführung einer nicht erfindungsgemäß ausgeführten Fliehkraftpendeleinrichtung in einer Schnittansicht B-B gemäß Figur 1;
- Figur 4c: zeigt eine Ausführung einer ersten Variante einer ersten Grundausführung einer nicht erfindungsgemäß ausgeführten Fliehkraftpendeleinrichtung in einer Schnittansicht C-C gemäß Figur 1;
- Figur 5a: zeigt eine Weiterentwicklung einer ersten Variante einer ersten Grundausführung gemäß Figur 4a;
- Figur 5b: zeigt für eine Weiterentwicklung einer ersten Variante einer ersten Grundausführung eine Ansicht B-B gemäß Figur 1;
- Figur 5c: zeigt eine Weiterentwicklung einer ersten Variante einer ersten Grundausführung gemäß Figur 4c;
- Figur 6: zeigt eine zweite Ausführung einer ersten Variante einer ersten Grundausführung einer nicht erfindungsgemäß ausgeführten Fliehkraftpendeleinrichtung in einer Schnittansicht A-A gemäß Figur 1;
- Figur 7: zeigt eine dritte Ausführung einer ersten Variante einer ersten Grundausführung einer nicht erfindungsgemäß ausgeführten Fliehkraftpendeleinrichtung in einer Schnittansicht B-B gemäß Figur 1;
- Figur 8a: zeigt eine erste Ausführung einer nicht erfindungsgemäß ausgeführten Fliehkraftpendeleinrichtung einer zweiten Variante einer ersten Grundausführung in einer Schnittansicht B-B gemäß Figur 1;
- Figur 8b: zeigt eine erste Ausführung einer nicht erfindungsgemäß ausgeführten Fliehkraftpendeleinrichtung einer zweiten Variante einer ersten Grundausführung in einer Schnittansicht B-B gemäß Figur 1;
- Figur 8c: zeigt eine erste Ausführung einer nicht erfindungsgemäß ausgeführten Fliehkraftpendeleinrichtung einer zweiten Variante einer ersten Grundausführung in einer Schnittansicht C-C gemäß Figur 1;
- Figur 9a: zeigt eine weitere Ausführung einer zweiten Variante einer ersten Grundausführung einer nicht erfindungsgemäß ausgeführten Fliehkraftpendeleinrichtung in einer Schnittansicht A-A gemäß Figur 1;
- Figur 9b: zeigt eine weitere Ausführung einer zweiten Variante einer ersten Grundausführung einer nicht erfindungsgemäß ausgeführten Fliehkraftpendeleinrichtung in einer Schnittansicht B-B gemäß Figur 1;
- Figur 9c: zeigt eine weitere Ausführung einer zweiten Variante einer ersten Grundausführung einer nicht erfindungsgemäß ausgeführten Fliehkraftpendeleinrichtung in einer Schnittansicht C-C gemäß Figur 1;
- Figur 10: zeigt eine besonders vorteilhafte weitere Ausführung einer zweiten Variante einer ersten Grundausführung einer nicht erfindungsgemäß ausgeführten Fliehkraftpendeleinrichtung in einer Schnittansicht A-A gemäß Figur 1.

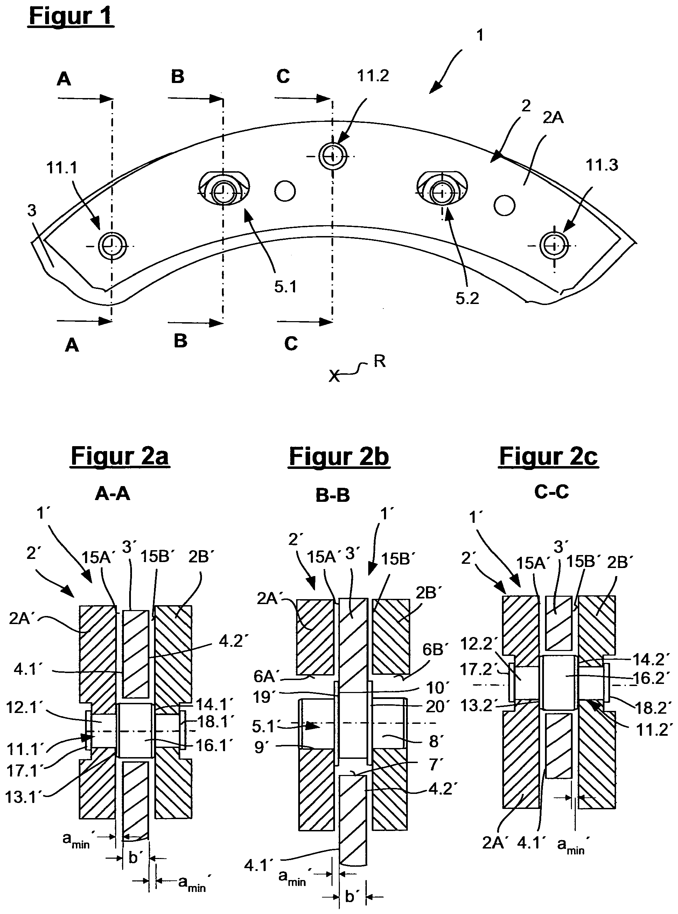

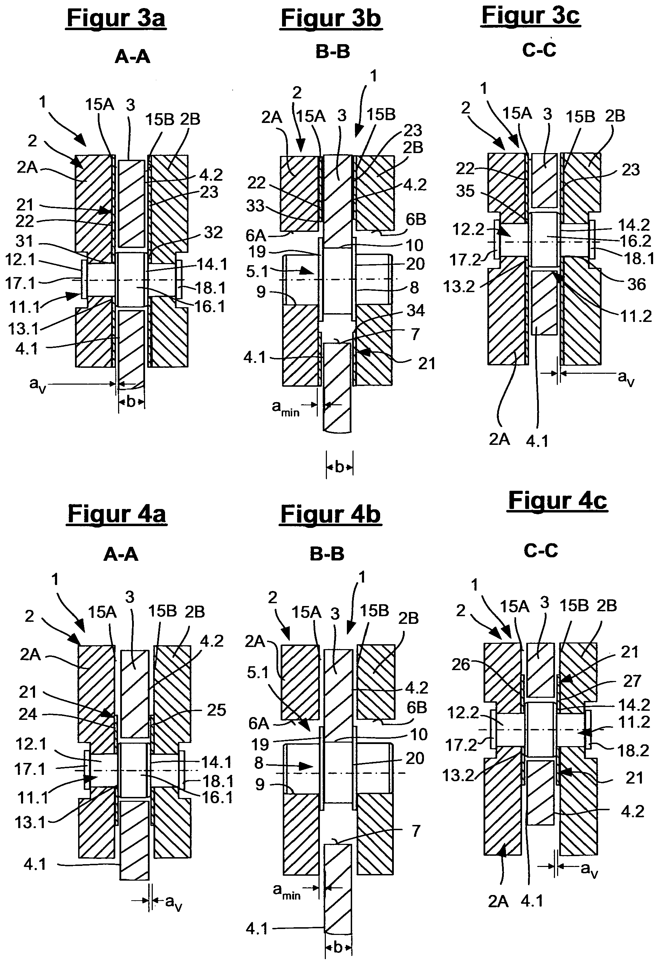

Die Figur 1 zeigt in schematisiert vereinfachter Darstellung einen Ausschnitt auf eine Ansicht von vorn auf einen erfindungsgemäß ausgeführten drehzahladaptiven Tilger in Form einer Fliehkraftpendeleinrichtung 1. Diese umfasst vorzugsweise mehrere als Pendelmassen 2 fungierende Trägheitsmassen, die an einem drehbaren Pendelmassenträger 3 relativ gegenüber diesem bewegbar gelagert sind. Die Lagerung erfolgt pendelnd. Der Pendelmassenträger 3 ist vorzugsweise als ringscheibenförmiges Element ausgeführt. An diesem sind in Umfangsrichtung um die Drehachse R betrachtet in gleichmäßigen Abständen verteilt die einzelnen Pendelmassen 2 angeordnet. Im dargestellten Ausschnitt ist lediglich eine Pendelmasse 2A einer Pendelmasseneinheit 2 wiedergegeben. Die Darstellung der Drehachse R erfolgt lediglich zur Verdeutlichung und nicht im korrekten Maßstab. Die Ausführung der Lagerung der einzelnen Pendelmassen 2A, 2B am Pendelmassenträger 3 ist in den Schnittdarstellungen A-A, B-B, C-C für die einzelnen Varianten der beiden Grundausführungen in den Figuren 3 bis 10 beschrieben. Die Schnittdarstellungen A-A, B-B, C-C in den Figuren 2a bis 2c verdeutlichen die sich bei einer Ausführung einer Fliehkraftpendeleinrichtung 1' gemäß dem Stand der Technik sich einstellende Problematik einer Verkippung der Pendelmassen 2A', 2B' gegenüber dem Pendelmassenträger 3'. Die einzelnen Komponenten sind in dieser Figur zusätzlich mit "'" gekennzeichnet.

In all diesen Ausführungen sind jeweils paarweise einander gegenüberliegend beidseitig der Stirnseiten 4.1 und 4.2 des Pendelmassenträgers 3 Pendelmassen 2A, 2B angeordnet. Die einzelnen Pendelmassen 2A, 2B weisen im Wesentlichen eine kreisringsegmentartige Gestalt auf. Dabei sind die einander an den Stirnseiten 4.1, 4.2 des Pendelmassenträgers 3 gegenüberliegenden Pendelmassen 2A, 2B miteinander unter Ausbildung einer einzelnen Pendelmasseneinheit 2 verbunden. Die Verbindungen sind hier mit 11.1, 11.2, 11.3 bezeichnet. Die Verbindungen 11.1 und 11.2 sind jeweils anhand der Schnittdarstellungen A-A und C-C gemäß Figur 1 in den nachfolgenden Figuren wiedergegeben. Die für die Verbindungen 11.1, 11.2 getätigten Ausführungen gelten in Analogie auch für die Verbindung 11.3. Die Realisierung der einzelnen Verbindung erfolgt im einfachsten Fall über ein Verbindungselement, welches gleichzeitig die Funktion der Einstellung des Abstandes zwischen beiden paarweise angeordneten Pendelmassen 2A, 2B übernimmt. Vorzugsweise finden ein Abstandsbolzen 12.1 für die Verbindung 11.1 und ein Abstandsbolzen 12.2 für die Verbindung 11.2 Verwendung. Die Abstandsbolzen 12.1, 12.2 sind jeweils durch den Pendelmassenträger 3 hindurchgeführt. Über diese Abstandsbolzen 12.1, 12.2 wird eine feste Verbindung beider Pendelmassen 2A, 2B unter Ausbildung der Pendelmasseneinheit 2 realisiert. Der einzelne Abstandsbolzen 12.1, 12.2 ist dazu als Stufenbolzen ausgeführt, umfassend jeweils zwei axiale Anschlagflächen 13.1, 14.1, beziehungsweise 13.2, 14.2 für die einzelnen zueinander weisenden Stirnseiten 15A, 15B der beiden Pendelmassen 2A, 2B. Der Abstandsbolzen 12.1, 12.2 ist dabei mit seinem durch den Pendelmassenträger 3 geführten Bereich 16.1, 16.2 derart ausgebildet, dass dieser größer als die Breite b des Pendelmassenträgers 3 ist und somit beidseitig zwischen den Pendelmassen 2A, 2B und dem Pendelmassenträger 3 ein Abstand a erzeugt wird. Dieser bemisst sich, wie bereits ausgeführt, aus der Breite des Bereichs 16.1 beziehungsweise 16.2, der Lage der axialen Anschlagflächen 13.1, 14.1 beziehungsweise für den Abstandsbolzen 12.2 der axialen Anschlagflächen 13.2, 14.2 sowie der Breite b des Pendelmassenträgers 3. Die Befestigung der einzelnen Pendelmasse 2A, 2B am Abstandsbolzen 12.1, 12.2 erfolgt kraft- und/oder formschlüssig. Diese kann beispielsweise über axiale Sicherungselemente, mittels der die einzelne Pendelmasse 2A, 2B jeweils gegenüber den axialen Anschlagflächen 13.1, 14.1 beziehungsweise 13.2, 14.2 verspannt wird, realisiert werden oder aber in besonders vorteilhafter Ausführung unlösbar formschlüssig mittels Nietverbindungen 17.1, 18.1, beziehungsweise 17.2, 18.2. Dazu sind die Niete in integraler Ausführung am Abstandsbolzen 12.1, 12.2 mit ausgebildet und werden bei der Montage ausgeformt.

Die pendelnde Lagerung der einzelnen Pendelmasse 2A, 2B erfolgt über zumindest eine Pendellageranordnung, hier zwei Pendellageranordnungen 5.1, 5.2, umfassend als Wälzkörper oder Laufrollen ausgebildete Abrollelemente 8, die an einer entsprechenden Laufbahn geführt sind. Der Aufbau einer Pendellageranordnung wird beispielhaft anhand der Pendellageranordnung 5.1 erläutert. Diese ist als Schnittdarstellung B-B in den nachfolgenden Figuren wiedergegeben. Dabei wird die Bewegung der einzelnen Pendelmasse 2A, 2B gegenüber dem Pendelmassenträger 3 im dargestellten Fall durch in Laufbahnen 6A, 6B und 7 geführte und als Wälzkörper oder Laufrollen ausgebildete Abrollelemente 8 ermöglicht. Die Laufbahnen 6A, 6B sind dabei für jede Pendelmasse 2A, 2B aus dieser ausgespart, die Laufbahn 6A aus der Pendelmasse 2A und die Laufbahn 6B aus der Pendelmasse 2B. Die Laufbahn 7 ist aus dem Pendelmassenträger 3 ausgespart. Im einfachsten Fall erfolgt die Aussparung in Form von Durchgangsöffnungen mit der an die gewünschte Kontur der Laufbahnen 6A, 6B oder 7 angepassten Geometrie. Insbesondere an den einzelnen Pendelmassen 2A, 2B sind auch Ausführungen von Laufbahnen 6A, 6B durch in die Pendelmasse 2A, 2B eingearbeitete Vertiefungen denkbar. Die Geometrie und Dimensionierung der einzelnen Laufbahnen 6A, 6B, 7 bestimmt dabei den zulässigen Bewegungsspielraum für die einzelne Pendelmasse 2A, 2B. Zur axialen Führung und Sicherung der einzelnen Abrollelemente 8 am Pendelmassenträger 3 sind Führungsmittel 19, 20 am einzelnen Abrollelement 8 vorgesehen, die beispielsweise als radiale Erweiterung ausgebildet sind und im dargestellten Fall in integraler Ausführung mit dem Abrollelement 8 unter Ausbildung von Schultern ausgeführt sind. Vorzugsweise sind paarweise einander gegenüberliegende Führungsmittel 19, 20 eines Abrollelementes 8 in einem geeigneten axialen Abstand zueinander angeordnet, der im Wesentlichen der Breite b des Pendelmassenträgers 3 in einem Bereich um die Laufbahn 7 entspricht. Der Abstand der Führungsmittel 19, 20 zueinander und die Breite dieser Führungsmittel 19 und 20 bestimmt dabei jeweils den erforderlichen Mindestabstand aₘᵢₙ zwischen der einzelnen Pendelmasse 2A beziehungsweise 2B und dem Pendelmassenträger 3 im Bereich der Pendellageranordung 5.1, 5.2. Dieser kann nicht beliebig reduziert werden. Je größer dieser Abstand aₘᵢₙ ist, umso mehr können unter bestimmten Betriebsbedingungen die einzelnen Pendelmassen 2A, 2B seitlich gekippt werden, was insbesondere bei geringer Fliehkraft beziehungsweise Drehzahl häufig auftritt.

Die Figuren 2a bis 2c verdeutlichen die Ankopplung der einzelnen Pendelmassen 2A', 2B' an den Pendelmassenträger 3 entsprechend der drei Schnittdarstellungen A-A, B-B und C-C aus Figur 1 gemäß dem Stand der Technik. Erkennbar ist hier der sich über die gesamte Erstreckung der Pendelmasse 2A', 2B' gegenüber dem Pendelmassenträger 3' aufgrund der axialen Breite der Führungsmittel 19', 20' erforderliche Mindestabstand aₘᵢₙ' zwischen Pendelmasse 2A', 2B' und Pendelmassenträger 3'. Dieser ist auch in den anderen Ansichten A-A und C-C gemäß der Figuren 2a und 2c immer zwischen Pendelmasse 2A', 2B' und Pendelmassenträger 3' gegeben. Aufgrund der Größe dieses Mindestabstandes aₘᵢₙ' ist ein Verkippen der Pendelmassen 2A, 2B gegenüber dem Pendelmassenträger 3' jederzeit möglich. Dies kann zu unerwünschten Erscheinungen führen, weshalb erfindungsgemäß das Verkippen nach Möglichkeit eliminiert oder zumindest verringert werden soll. Dies wird erfindungsgemäß über Mittel 21 zur zumindest örtlich begrenzten Verringerung des axialen Abstandes zwischen dem Pendelmassenträger 3 und den an diesen angeordneten Pendelmassen 2A, 2B realisiert. Derartige Mittel können verschiedenartig ausgebildet sein. Dabei wird zwischen Ausführungen mit integraler Ausführung an den Pendelmassen 2A, 2B und/oder dem Pendelmassenträger 3 oder separaten Einrichtungen unterschieden.

Die erste Variante ist durch das Vorsehen separater Zusatzelemente charakterisiert. Die Ausführungen in den nachfolgenden Figuren entsprechen den Schnittdarstellungen A-A, B-B und C-C entsprechend der Figur 1.

Die Figuren 3a bis 3c verdeutlichen eine erste Variante einer zweiten, erfindungsgemäßen Grundausführung in den genannten Schnittansichten A-A, B-B, C-C gemäß Figur 1. Die Figur 3a verdeutlicht die Schnittdarstellung A-A gemäß Figur 1. Die Mittel 21 umfassen hier jeweils ein Zusatzelement in Form eines scheibenförmigen Elementes 22, 23, wobei jedes der Zusatzelemente zwischen dem Pendelmassenträger 3 und der an der jeweiligen Stirnseite 4.1 oder 4.2 dessen angeordneten Pendelmasse 2A, 2B angeordnet ist. Die Zusatzelemente in Form der scheibenförmigen Elemente 22 und 23 sind derart ausgeführt und angeordnet, dass diese jeweils über die gesamte Erstreckung der jeweils zueinander weisenden Stirnseiten 15A, 15B der einzelnen Pendelmassen 2A, 2B in radialer und in Umfangsrichtung angeordnet sind, wobei diese im Bereich der Ausbildung der Laufbahnen 6A, 6B und 7, des von den Führungsmitteln 19, 20 überstreichbaren Bereiches im Spalt sowie der Durchgangsöffnungen für die Verbindungselemente der Verbindungen 11.1, 11.2 und 11.2 ausgespart sind. Die Zusatzelemente sind vorzugsweise aus Gründen einer einfachen Fertigung als Blechscheibenbauteile ausgebildet. Diese überdecken damit die Oberfläche der Stirnseiten 15A, 15B der einzelnen Pendelmassen 2A, 2B nahezu vollflächig und sind hinsichtlich der Außenkontur an die Pendelmassen 2A, 2B angepasst.

Figur 3a zeigt die Ansicht A-A gemäß Figur 1. In dieser erkennbar ist das vollflächige Anliegen der einzelnen Zusatzelemente an den Stirnseiten 15A, 15B der Pendelmassen 2A, 2B, die Anordnung zwischen diesen und den axialen Anschlagflächen 13.1, 13.2 des Abstandsbolzens 12.1, die Durchgangsöffnungen 31, 32 für die axialen Endbereiche des Abstandsbolzens 12.1 sowie der mit diesen erzeugbare verringerte Abstand aᵥ zwischen Pendelmasse 2A, 2B und Pendelmassenträger 3. Die Zusatzelemente in Form der scheibenförmigen Elemente 22, 23 sind den Pendelmassen 2A, 2B zugeordnet und an diesen befestigt. Die Befestigung erfolgt über den ohnehin vorhandenen Abstandsbolzen 12.1, wobei dessen axiale Endbereiche derart ausgebildet sind, dass diese geeignet sind, einen Nietkopf zur Ausbildung einer Nietverbindung 17.1, 18.1 zu formen.

Die Figur 3b zeigt eine Schnittdarstellung B-B durch die Pendellageranordnung 5.1. Erkennbar ist hier der im Bereich der Führungsmittel 19, 20 und des von diesen bei Abrollbewegung des Abrollelementes 8 überstrichenen Bereiches erforderliche einzuhaltende Mindestabstand aₘᵢₙ zwischen Pendelmassenträger 3 und einzelner Pendelmasse 2A, 2B. Erkennbar ist ferner, dass das einzelne scheibenförmige Element 22, 23 jeweils in diesen Bereichen unter Bereitstellung des Mindestabstandes aₘᵢₙ für diesen Bereich ausgespart ist, d.h. Durchbrüche beziehungsweise Durchgangsöffnungen 33, 34 umfasst, die vorzugsweise größer als die freizuhaltenden Bereiche sind oder aber genau an die Geometrie des bei Bewegung überstrichenen Bereiches angepasst sein können. Die Aussparungen sind dann derart bemessen, dass diese bei Anliegen der Abrollelemente 8 jeweils an den Abrollflächen an der radial inneren Abrollfläche 9 oder der radial äußeren Abrollfläche 10 unter Beibehaltung eines Abstandes zur Aufnahme der Führungsmittel 19, 20 ausgeführt sind. Es muss immer gewährleistet sein, dass die Führungsmittel 16 frei von einer Berührung mit den Zusatzelementen sind.

Die Figur 3c verdeutlicht in einer Ansicht auf eine Schnittdarstellung C-C gemäß Figur 1 die Anordnung der Zusatzelemente im Bereich der Verbindung 11.2. Der Grundaufbau entspricht der Ausführung in Figur 3a. Die scheibenförmigen Elemente 22, 23 weisen hier Durchgangsöffnungen 35 und 36 zur Aufnahme des Abstandsbolzens 12.2 auf. Auch hier erfolgt die Verbindung durch Vernieten. Die Nietverbindungen sind mit 17.1, 18.2 bezeichnet. Ferner dargestellt ist auch hier der verringerte Abstand av.

Die Zusatzelemente in Form der scheibenförmigen Elemente 22, 23 sind derart angeordnet und ausgebildet, dass deren Oberfläche immer einen gleichen verringerten Abstand av in der Ideallage zum Pendelmassenträger 3 aufweist. Denkbar wäre auch, die zum Pendelmassenträger 3 weisende Oberfläche mit Erhebungen oder Vertiefungen auszuführen, so dass so dass der sich ergebende Spalt in radialer und/oder Umfangsrichtung hinsichtlich seiner Breite variieren kann.

Gegenüber den Ausführungen in den Figuren 3a bis 3c verdeutlichen die Figuren 4a bis 4c eine erste Variante einer ersten, nicht erfindungsgemäßen Grundausführung, bei welcher die Mittel 21 keine Zusatzelemente umfassen, die als die Stirnseiten 15A, 15B der Pendelmassen 2A, 2B vollständig überdeckende Elemente ausgeführt sind, sondern örtlich begrenzt angeordnete Zusatzelemente in Form von Unterlegscheiben 24, 25 und 26, 27. Die Unterlegscheiben sind beidseitig zwischen Pendelmasse 2A, 2B und Abstandsbolzen 12 genietet. Die Anordnung der Zusatzelemente in Form der Unterlegscheiben 24 bis 27 erfolgt dabei nur im Bereich der drehfesten Verbindungen 11.1, 11.2 und in Analogie 11.3. Die Zusatzelemente sind nur in einem Teilbereich des Spaltes angeordnet, erlauben aber in diesem eine Abstandsverringerung, die aufgrund der Anordnung der Verbindungen 11.1, 11.2, 11.3 zwischen den einzelnen Pendelmassen 2A, 2B über die gesamte Pendelmasseneinheit 2 ein Verkippen verhindert. Dabei ist jede der einzelnen Verbindungen 11.1, 11.2, 11.3 der einzelnen Pendelmassen 2A und 2B einer Pendelmasseneinheit 2 durch das Zwischenlegen derartiger Unterlegscheiben 24, 25 in Figur 4a und 26, 27 in Figur 4c charakterisiert. Der Bereich der Pendellageranordnungen 5.1 in Figur 4b und nicht dargestellt 5.2 ist frei von derartigen Unterlegscheiben.

Die Figur 4a verdeutlicht dabei einen Axialschnitt durch die Verbindung 11.1. Die Unterlegscheibe 24 ist zwischen axialer Anschlagfläche 13.1 und Pendelmasse 2A angeordnet. Die Anordnung der Unterlegscheibe 25 erfolgt zwischen Pendelmasse 2B und axialer Anschlagfläche 14.1. Erkennbar ist, dass der Außendurchmesser der Unterlegscheiben 24, 25 größer sein muss, als der der Durchgangsöffnung 37, durch welche der Abstandsbolzen 12.1 den Pendelmassenträger 3 durchdringt. Der Innendurchmesser der einzelnen Unterlegscheiben 24, 25 ist vorzugsweise an den Durchmesser der axialen Endbereiche des Abstandsbolzens 12.1 angepasst.

Die Figur 4b zeigt den Schnitt B-B gemäß Figur 1 für diese Ausführung. Daraus ersichtlich ist, dass in diesem Bereich keine Anordnung von Unterlegscheiben oder Abstandsfüllelementen erfolgt.

Die Figur 4c verdeutlicht in Analogie zu Figur 4a den Axialschnitt C-C gemäß Figur 1 für die Verbindung 11.2. Auch hier sind Unterlegscheiben 26 und 27 beidseitig des Pendelmassenträgers 3 zwischen den axialen Anschlagflächen 13.2, 14.2 und den Pendelmassen 2A, 2B angeordnet. Die Befestigung an den Pendelmassen 2A, 2B erfolgt in Analogie zur Ausführung in Figur 4a.

Für die einzelnen Verbindungen 11.1 bis 11.3 gilt, dass im dargestellten Fall die Zusatzelemente in Form der Unterlegscheiben 24 bis 27 derart angeordnet sind, dass diese an den axialen Anschlagflächen 13.1, 13.2 und 14.1, 14.2 im Abstandsbolzen 12.1, 12.2 anschlagen. Um eine Verringerung des axialen Abstandes zu erzielen, ist der Abstandsbolzen 12.1, 12.2 mit seinem Bereich 16.1, 16.2 mit geringerer Breite als bei einer Ausführung gemäß dem Stand der Technik, wie in den Figuren 2a bis 2c beschrieben ausgeführt.

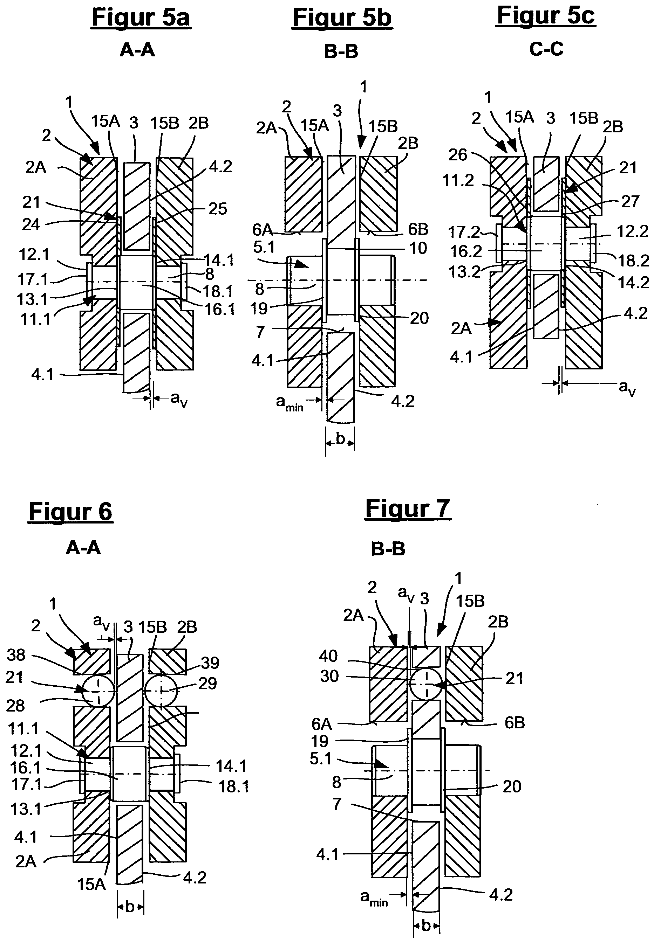

Die Figuren 5a bis 5c verdeutlichen eine Weiterentwicklung der ersten Variante der ersten Grundausführung gemäß den Figuren 4a bis 4c. Bei dieser Ausführung sind die axialen Anschlagflächen 13.1, 13.2 und 14.1, 14.2 als Anschlagflächen für die einzelnen Pendelmassen 2A, 2B ausgeführt, wobei die Anordnung der Unterlegscheiben 24, 25 und 26, 27 im Zwischenraum zwischen Pendelmassenträger 3 und den einzelnen Pendelmassen 2A, 2B lose erfolgt. Dabei ist jedoch zu gewährleisten, dass die Unterlegscheiben 23 und 24 nicht an den Pendelmassenträger 3 anschlagen, weshalb die Abstandsbolzen 12.1 beziehungsweise 12.2 im Bereich der axialen Anschlagflächen 13.1, 13.2 und 14.1, 14.2 derart ausgeführt sind, dass dieser auch die Unterlegscheiben 24, 25 beziehungsweise für die Ausführung in Figur 5c 26, 27 in ihrer Lage mit fixiert. Im einfachsten Fall werden dazu die Unterlegscheiben derart ausgebildet, dass diese im Bereich der Fase gestützt oder aber mit dem Abstandsbolzen 12.1, 12.2 verpresst werden.

Weitere Varianten der ersten Variante der ersten Grundausführung sind gemäß den Figuren 6 und 7 durch das Vorsehen separater, in den einzelnen Komponenten Pendelmasse 2A, 2B und/oder Pendelmassenträger 3 integrierter oder gelagerter Zusatzelemente 28, 29 oder 30 charakterisiert. Bei diesen Zusatzelementen 28 bis 30 kann es sich um verschiedenartig ausgeführte, zumindest einen axialen, in den Spalt hineinragenden Vorsprung ausbildende Elemente wie Kugeln, Halbschalen, Zylinderstifte oder ähnliches handeln. Entscheidend ist, dass diese einen axialen Überstand in den Spalt zwischen Pendelmasse 2A, 2B und Pendelmassenträger 3 erzeugen.

Die Figur 6 zeigt anhand einer Schnittansicht durch die Verbindung 11.1 in einer Ansicht A-A gemäß Figur 1 eine Integration derartiger Zusatzelemente 28 und 29 in Form von kugelförmigen Elementen, die in entsprechenden Aufnahmen 38, 39 an den einzelnen Pendelmassen 2A, 2B gelagert oder befestigt sind. Die Zusatzelemente 28, 29 sind bezogen auf die Breite der einzelnen Pendelmassen 2A, 2B derart an diesen angeordnet oder in diesen integriert, dass diese an den jeweiligen zueinander weisenden Stirnseiten 15A, 15B der einzelnen Pendelmassen 2A, 2B jeweils einen axial überstehenden Vorsprung ausbilden. Die Anordnung dieser Zusatzelemente kann beliebig an den Pendelmassen 2A, 2B erfolgen. Entscheidend ist, dass die durch diese bedingte örtlich begrenzte Abstandsverringerung jedoch außerhalb des Bewegungsbereiches der Führungsmittel 19, 20 im Spalt erfolgt.

Demgegenüber verdeutlicht die Figur 7 eine alternative Anordnung derartiger Zusatzelemente, hier eines Zusatzelementes 30 am Pendelmassenträger 3 in einer Ansicht B-B gemäß Figur 1. Auch hier ist das Zusatzelement 30 als kugelförmiges Element ausgeführt und in einer Aufnahme 40 am Pendelmassenträger 3 gelagert. Das Zusatzelement 30 ist derart angeordnet und bemessen, dass dieses einen axialen Überstand in den Spalt bildet.

Die in den Figuren 6 und 7 dargestellten Ausführungen sind beispielhaft. Denkbar sind die Verwendung unterschiedlichster Zusatzelemente als Mittel 21, welche lediglich zur Ausbildung axial überstehender Bereiche an den Pendelmassen 2A, 2B und/oder dem Pendelmassenträger 3 geeignet sein müssen. Diese können bewegbar an den Pendelmassen 2A, 2B oder dem Pendelmassenträger 3 gelagert oder aber an diesen befestigt oder eingearbeitet sein. Bei Befestigung kann die Verbindung kraft-, form- oder stoffschlüssig erfolgen. Die Anordnung erfolgt in Abhängigkeit der erforderlichen zu erzeugenden Bereiche mit Abstandsverringerung im Spalt.

Die Wahl der Anzahl, Geometrie und Dimensionierung der durch die Zusatzelemente zu erzeugenden Bereiche örtlich begrenzter Abstandsverringerung erfolgt in Abhängigkeit der Erfordernisse des Einsatzfalles.

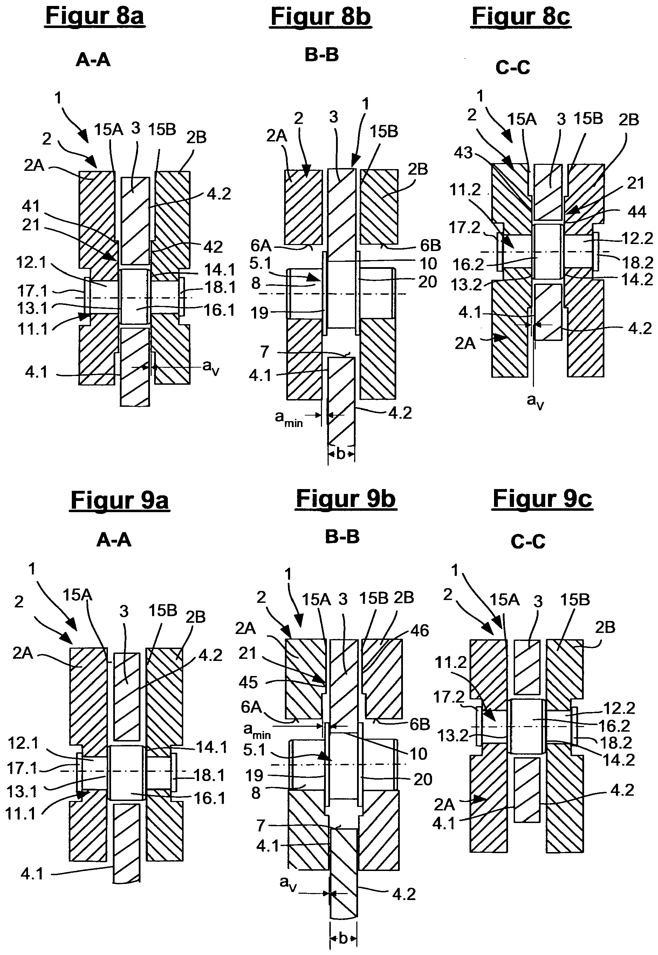

Die Figuren 8 bis 10 verdeutlichen Ausführungen einer zweiten Variante einer ersten Grundausführung, d.h. mit integraler Ausbildung der Mittel 21 an zumindest einer der Komponenten Pendelmasse 2A, 2B und/oder Pendelmassenträger 3.

Die Figuren 8a und 8c verdeutlichen die örtlich begrenzte Anordnung von Anprägungen 41, 42 an den Pendelmassen 2A, 2B im Bereich der Verbindung 11.1 sowie Anprägungen 43, 44 an den Pendelmassen 2A, 2B im Bereich ihrer über den Abstandsbolzen 12.2 realisierten Verbindung 11.2. Die Anprägungen 41, 42 sowie 43, 44 sind dabei im Bereich der Durchgangsöffnungen für den Abstandsbolzen 12.1 beziehungsweise 12.2 durch die Pendelmassen 2A, 2B angeordnet. Diese sind in radialer Richtung derart bemessen, dass deren Außenumfang auf einem größeren Durchmesser bezogen auf den Abstandsbolzen 12.1, 12.2 angeordnet ist als der Durchmesser der Durchgangsöffnung am Pendelmassenträger 3. Die Anprägungen 41, 42 sind im dargestellten Fall derart ausgeführt, dass diese an den axialen Anschlagflächen 13.1, 14.1 beziehungsweise die Anprägungen 43, 44 an den axialen Anschlagflächen 13.1, 14.2 anliegen. Die Bereiche verringerten Abstandes aᵥ werden hier zwischen den Anprägungen 41 und 43 an der Pendelmasse 2A und 42 und 44 an der Pendelmasse 2B und dem Pendelmassenträger 3 erzeugt. Die Anprägungen 41 bis 44 beschreiben vorzugsweise ebene, zum Pendelmassenträger ausgerichtete Flächen. Der um die Anprägungen 41, 42 beziehungsweise 43, 44 angeordnete Bereich an den Pendelmassen 2A, 2B ist frei von derartigen Anprägungen und dient der Bereitstellung des erforderlichen Abstandes im Bewegungsbereich der Führungsmittel 19, 20 des Abrollelementes 8 zwischen Pendelmasse 2A, 2B und Pendelmassenträger 3.

Die in den Figuren 8a bis 8c dargestellte Anordnung der Anprägungen 41, 42 43 und 44 ist nicht zwingend. Diese kann auch an anderer Stelle an der Pendelmasse 2A, 2B erfolgen, wobei jedoch immer zu gewährleisten ist, dass der Bewegungsbereich der Führungsmittel 19, 20 des Abrollelementes 8 frei bleibt.

Die Figur 8b zeigt die Pendellageranordnung 5.1, welche frei von derartigen Anprägungen ist.

Gegenüber der Ausführung in den Figuren 8a bis 8c zeigen die Figuren 9a bis 9c eine weitere Ausführung, bei welcher die Mittel 21 bildenden Anprägungen nicht an den Pendelmassen 2A, 2B sondern dem Pendelmassenträger 3 angeordnet sind. Die Anordnung der Anprägungen 45 und 46 erfolgt hier am Pendelmassenträger 3 außerhalb des Bereiches der Laufbahn 7 und des von den Führungsmitteln 19, 20 überstreichbaren Bereiches im Spalt. Die Anprägungen 45, 46 bilden somit eine Vertiefung im Aufnahmebereich des Abrollelementes 8 und der Laufbahnen, die durch den erforderlichen Mindestabstand für die Aufnahme der Führungsmittel 19, 20 charakterisiert ist.

Die Anprägungen 45, 46 am Pendelmassenträger 3 sind vorzugsweise im Bereich um die Laufbahnen der einzelnen Pendellageranordnungen 5.1, 5.2 angeordnet. Die übrigen Bereiche sind vorzugsweise frei. Erkennbar ist dies an den Schnittdarstellungen A-A und C-C in den Figuren 9a und 9c.

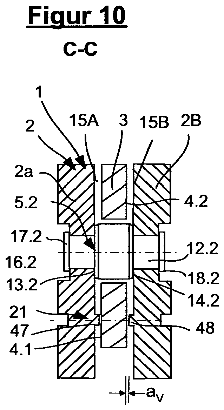

Eine weitere besonders vorteilhafte Ausbildung örtlich begrenzter Oberflächen zur örtlichen Verringerung des Spaltabstandes ist in Figur 10 anhand einer Schnittdarstellung A-A gemäß Figur 1 wiedergegeben. Bei dieser Ausführung erfolgt die Ausbildung der örtlichen, in axialer Richtung in den Spalt hineinragenden Vorsprünge als Durchsetzungen 47 und 48, die jeweils an beiden Pendelmassen 2A, 2B vorgesehen werden. Vorzugsweise werden die Durchsetzungen 47, 48 an den einzelnen Pendelmassen 2A, 2B ausgebildet. Denkbar ist auch die hier nicht dargestellte Ausführung am Pendelmassenträger 3.

Die Anordnung der Durchsetzungen kann beliebig erfolgen. Entscheidend ist auch hier, dass der Bewegungsbereich der Führungsmittel 19, 20 im Spalt nicht beeinträchtigt wird und ferner der Vorsprung gegenüber einer Gegenfläche am anderen Element, d.h. in diesem Fall dem Pendelmassenträger 3 angeordnet ist. Die Anordnung erfolgt daher immer außerhalb von Durchgangsöffnungen am Pendelmassenträger 3.

### Bezuaszeichenliste

- 1', 1: Fliehkraftpendeleinrichtung
- 2', 2: Pendelmasseneinheit
- 2A', 2A: Pendelmasse einer Pendelmasseneinheit
- 2B', 2B: Pendelmasse einer Pendelmasseneinheit
- 3', 3: Pendelmassenträger
- 4.1', 4.1: Stirnseite
- 4.2', 4.2: Stirnseite
- 5.1', 5.1: Pendellageranordnung
- 5.2', 5.2: Pendellageranordnung
- 6A, 6B: Laufbahn
- 6A', 6B': Laufbahn
- 7', 7: Laufbahn
- 8', 8: Abrollelement
- 9', 9: radial innere Abrollfläche
- 10', 10: radial äußere Abrollfläche
- 11.1', 11.1: drehfeste Verbindung
- 11.2', 11.2: drehfeste Verbindung
- 11.3', 11.3: drehfeste Verbindung
- 12.1', 12.1: Abstandsbolzen
- 12.2', 12.2: Abstandsbolzen
- 13.1', 13.1: axiale Anschlagfläche
- 14.1', 14.1: axiale Anschlagfläche
- 13.2', 13.2: axiale Anschlagfläche
- 14.2', 14.2: axiale Anschlagfläche
- 15A', 15A: Stirnseite einer Pendelmasse
- 15B', 15B: Stirnseite einer Pendelmasse
- 16.1', 16.1: Bereich
- 16.2', 16.2: Bereich
- 17.1', 17.1: Nietverbindung
- 17.2', 17.2: Nietverbindung
- 18.1', 18.1: Nietverbindung
- 18.2', 18.2: Nietverbindung
- 19', 19: Führungsmittel
- 20', 20: Führungsmittel
- 21: Mittel zur zumindest örtlich begrenzten Verringerung des Spaltabstandes
- 22, 23: scheibenförmige Elemente
- 24, 25: Unterlegscheiben
- 26, 27: Unterlegscheiben
- 28: Zusatzelement
- 29: Zusatzelement
- 30: Zusatzelement
- 31: Durchgangsöffnung
- 32: Durchgangsöffnung
- 33: Durchgangsöffnung
- 34: Durchgangsöffnung
- 35: Durchgangsöffnung
- 36: Durchgangsöffnung
- 37: Durchgangsöffnung
- 38: Aufnahme
- 39: Aufnahme
- 40: Aufnahme
- 41: Anprägung
- 42: Anprägung
- 43: Anprägung
- 44: Anprägung
- 45: Anprägung
- 46: Anprägung
- 47: Durchsetzung
- 48: Durchsetzung
- R: Drehachse
- b: Breite Pendelmassenträger
- aₘᵢₙ': Abstand
- a_{V}: verringerter Abstand

## Patentansprüche

1. Fliehkraftpendeleinrichtung (1), umfassend wenigstens einen Pendelmassenträger (3) und wenigstens eine daran angeordnete Pendelmasse (2A, 2B), die mittels zumindest eines Abrollelementes (8) innerhalb von durch Aussparungen in dem Pendelmassenträger (3) und der Pendelmasse (2A, 2B) gebildeten Laufbahnen (6A, 6B, 7) aufgenommen und durch die Pendelmasse (2A, 2B) und den Pendelmassenträger (3) durchgreifenden Abrollelementes (8) gegenüber dem Pendelmassenträger (3) radial und in Umfangsrichtung begrenzt bewegbar ist, wobei das Abrollelement (8) ein im Spalt zwischen Pendelmasse (2A, 2B) und Pendelmassenträger (3) ausgebildetes Führungsmittel (19, 20) aufweist, wobei außerhalb der Laufbahnen (6A, 6B, 7) für das Abrollelement (8) und des bei Abrollbewegung des Abrollelementes (8) durch die Führungsmittel (19, 20) überstreichbaren Bereiches des Spaltes zwischen Pendelmasse (2A, 2B) und Pendelmassenträger (3) Mittel (21) zur zumindest örtlich begrenzten Verringerung des Spaltabstandes zwischen Pendelmasse (2A, 2B) und Pendelmassenträger (3) vorgesehen sind, **dadurch gekennzeichnet, dass** die Mittel (21) zur zumindest örtlich begrenzten Verringerung des Spaltabstandes über die gesamte Erstreckung des Spaltes in radialer Richtung und in Umfangsrichtung außerhalb der Laufbahnen (6A, 6B, 7) für das Abrollelement (8) und des bei Abrollbewegung des Abrollelementes (8) durch die Führungsmittel (19, 20) überstreichbaren Bereiches zwischen Pendelmasse (2A, 2B) und Pendelmassenträger (3) angeordnet sind

2. Fliehkraftpendeleinrichtung (1) nach Anspruch 1, **dadurch gekennzeichnet, dass** die Mittel (21) zur zumindest örtlich begrenzten Verringerung des Spaltabstandes mit der Pendelmasse (2A, 2B) gekoppelt sind oder an dieser ausgebildet sind.

3. Fliehkraftpendeleinrichtung (1) nach einem der Ansprüche 1 bis 2, **dadurch gekennzeichnet, dass** die Mittel (21) zur zumindest örtlich begrenzten Verringerung des Spaltabstandes mit dem Pendelmassenträger (3) gekoppelt sind oder an diesem ausgebildet sind.

4. Fliehkraftpendeleinrichtung (1) nach einem der Ansprüche 1 bis 3, **dadurch gekennzeichnet, dass** die Mittel (21) zur zumindest örtlich begrenzten Verringerung des Spaltabstandes zumindest ein Zusatzelement (22, 23, 24, 25, 26, 27, 28, 29, 30) umfassen, welches mit der Pendelmasse (2A, 2B) und/oder dem Pendelmassenträger (3) verbunden ist oder an diesem gelagert ist.

5. Fliehkraftpendeleinrichtung (1) nach einem der Ansprüche 1 bis 4, **dadurch gekennzeichnet, dass** die einzelne Pendelmasse (2A, 2B) über ein Abstandselement mit dem Pendelmassenträger (3) gekoppelt ist und/oder jeweils zwei Pendelmassen (2A, 2B) paarweise aneinander gegenüberliegend an einem Pendelmassenträger (3) angeordnet sind und in ihrer Lage zueinander über zumindest einen durch den Pendelmassenträger (3) geführten Abstandsbolzen (12.1, 12.2) fixiert sind und die Befestigung der Mittel (21) zur zumindest örtlich begrenzten Verringerung des Spaltabstandes unter Ausnutzung des Abstandselement oder Abstandsbolzens (12.1, 12.2) und/oder die mit diesem verbundenen oder an diesem vorgesehenen axialen Sicherungselemente erfolgt.

6. Fliehkraftpendeleinrichtung (1) nach einem der Ansprüche 1 bis 5, **dadurch gekennzeichnet, dass** die Mittel (21) zur zumindest örtlich begrenzten Verringerung des Spaltabstandes in integraler Bauweise an der Pendelmasse (2A, 2B) und/oder dem Pendelmassenträger (3) ausgebildet sind.

## Claims

1. Centrifugal force pendulum device (1), comprising at least one pendulum mass carrier (3) and at least one pendulum mass (2A, 2B) which is arranged thereon, which is received by means of at least one rolling element (8) within raceways (6A, 6B, 7) which are formed by way of cut-outs in the pendulum mass carrier (3) and the pendulum mass (2A, 2B), and can be moved to a limited extent radially and in the circumferential direction with respect to the pendulum mass carrier (3) rolling element (8) which engages through the pendulum mass (2A, 2B) and the pendulum mass carrier (3), the rolling element (8) having a guide means (19, 20) which is configured in the gap between the pendulum mass (2A, 2B) and the pendulum mass carrier (3), means (21) for the at least locally limited reduction of the gap distance between the pendulum mass (2A, 2B) and the pendulum mass carrier (3) being provided outside the raceways (6A, 6B, 7) for the rolling element (8) and outside that region of the gap between the pendulum mass (2A, 2B) and the pendulum mass carrier (3) which is swept over by way of the guide means (19, 20) during a rolling movement of the rolling element (8), **characterized in that** the means (21) for the at least locally limited reduction of the gap distance are arranged over the entire extent of the gap in the radial direction and in the circumferential direction outside the raceways (6A, 6B, 7) for the rolling element (8) and outside that region between the pendulum mass (2A, 2B) and the pendulum mass carrier (3) which is swept over by way of the guide means (19, 20) during a rolling movement of the rolling element (8).

2. Centrifugal force pendulum device (1) according to Claim 1, **characterized in that** the means (21) for the at least locally limited reduction of the gap distance are coupled to the pendulum mass (2A, 2B) or are configured on the latter.

3. Centrifugal force pendulum device (1) according to either of Claims 1 and 2, **characterized in that** the means (21) for the at least locally limited reduction of the gap distance are coupled to the pendulum mass carrier (3) or are configured on the latter.

4. Centrifugal force pendulum device (1) according to one of Claims 1 to 3, **characterized in that** the means (21) for the at least locally limited reduction of the gap distance comprise at least one additional element (22, 23, 24, 25, 26, 27, 28, 29, 30) which is connected to the pendulum mass (2A, 2B) and/or the pendulum mass carrier (3) or is mounted on the latter.

5. Centrifugal force pendulum device (1) according to one of Claims 1 to 4, **characterized in that** the individual pendulum mass (2A, 2B) is coupled via a spacer element to the pendulum mass carrier (3) and/or in each case two pendulum masses (2A, 2B) are arranged on a pendulum mass carrier (3) so as to lie opposite one another in pairs and are fixed in their position with respect to one another via at least one spacer bolt (12.1, 12.2) which is guided through the pendulum mass carrier (3), and the fastening of the means (21) for the at least locally limited reduction of the gap distance takes place with the utilization of the spacer element or spacer bolt (12.1, 12.2) and/or the axial securing elements which are connected to the latter or are provided on the latter.

6. Centrifugal force pendulum device (1) according to one of Claims 1 to 5, **characterized in that** the means (21) for the at least locally limited reduction of the gap distance are configured in an integral design on the pendulum mass (2A, 2B) and/or the pendulum mass carrier (3).

## Revendications

1. Dispositif de pendule centrifuge (1), comprenant au moins un support de masse pendulaire (3) et au moins une masse pendulaire (2A, 2B) disposée sur celui-ci, qui est logée au moyen d'au moins un élément roulant (8) à l'intérieur de pistes de roulement (6A, 6B, 7) formées par des découpes dans le support de masse pendulaire (3) et dans la masse pendulaire (2A, 2B) et qui est déplaçable de façon limitée radialement et en direction périphérique par rapport au support de masse pendulaire (3) l'élément roulant (8) traversant la masse pendulaire (2A, 2B) et le support de masse pendulaire (3), dans lequel l'élément roulant (8) présente un moyen de guidage (19, 20) formé dans la fente entre la masse pendulaire (2A, 2B) et le support de masse pendulaire (3), dans lequel il est prévu, à l'extérieur des pistes de roulement (6A, 6B, 7) pour l'élément roulant (8) et de la région de la fente entre la masse pendulaire (2A, 2B) et le support de masse pendulaire (3) pouvant être parcourue par les moyens de guidage (19, 20) lors du mouvement de roulement de l'élément roulant (8), des moyens (21) pour la diminution limitée au moins localement de l'écartement de la fente entre la masse pendulaire (2A, 2B) et le support de masse pendulaire (3), **caractérisé en ce que** les moyens (21) pour la diminution limitée au moins localement de l'écartement de la fente sont disposés entre la masse pendulaire (2A, 2B) et le support de masse pendulaire (3) sur toute l'extension de la fente en direction radiale et en direction périphérique à l'extérieur des pistes de roulement (6A, 6B, 7) pour l'élément roulant (8) et de la région pouvant être parcourue par les moyens de guidage (19, 20) lors du mouvement de roulement de l'élément roulant (8).

2. Dispositif de pendule centrifuge (1) selon la revendication 1, **caractérisé en ce que** les moyens (21) pour la diminution limitée au moins localement de l'écartement de la fente sont couplés à la masse pendulaire (2A, 2B) ou sont formés sur celle-ci.

3. Dispositif de pendule centrifuge (1) selon l'une quelconque des revendications 1 à 2, **caractérisé en ce que** les moyens (21) pour la diminution limitée au moins localement de l'écartement de la fente sont couplés au support de masse centrifuge (3) ou sont formés sur celui-ci.

4. Dispositif de pendule centrifuge (1) selon l'une quelconque des revendications 1 à 3, **caractérisé en ce que** les moyens (21) pour la diminution limitée au moins localement de l'écartement de la fente comprennent au moins un élément additionnel (22, 23, 24, 25, 26, 27, 28, 29, 30), qui est assemblé à la masse pendulaire (2A, 2B) et/ou au support de masse pendulaire (3) ou qui est monté sur celui-ci.

5. Dispositif de pendule centrifuge (1) selon l'une quelconque des revendications 1 à 4, **caractérisé en ce que** la masse pendulaire individuelle (2A, 2B) est couplée au support de masse pendulaire (3) par un élément d'écartement et/ou chaque fois deux masses pendulaires (2A, 2B) sont disposées par paires l'une en face de l'autre sur un support de masse pendulaire (3) et sont fixées en position l'une par rapport à l'autre par au moins un pivot d'écartement (12.1, 12.2), guidé à travers le support de masse pendulaire (3), et la fixation des moyens (21) pour la diminution limitée au moins localement de l'écartement de la fente est réalisée en utilisant l'élément d'écartement ou le pivot d'écartement (12.1, 12.2) et/ou les éléments de fixation axiaux assemblés à celui-ci ou prévus sur celui-ci.

6. Dispositif de pendule centrifuge (1) selon l'une quelconque des revendications 1 à 5, **caractérisé en ce que** les moyens (21) pour la diminution limitée au moins localement de l'écartement de la fente sont formés par construction intégrale sur la masse pendulaire (2A, 2B) et/ou sur le support de masse pendulaire (3).
